# EUROPÄISCHE PATENTSCHRIFT

(11) **EP 1 531 098 B1**
(45) Veröffentlichungstag und Bekanntmachung des Hinweises auf die Patenterteilung: **19.09.2018**
(21) Anmeldenummer: 04105756.3
(22) Anmeldetag: 15.11.2004
(51) Int. Cl.: B60R 21/16

(54) **Airbag**
Airbag
Sac gonflable

(30) Priorität: 13.11.2003 DE 10353228
(43) Veröffentlichungstag der Anmeldung: 18.05.2005
(73) Patentinhaber: Ford Global Technologies, LLC, A subsidary of Ford Motor Company, Dearborn, MI 48126 (US)
(72) Erfinder: Varcus, Johannes A., 45549 Sprockhövel (DE); Heitplatz, Frank, Dr., 50735 Köln (DE); Landheer, Dirk, Dr., 5671 XD Nuenen (NL); Scott, Tim, Benfleet, Essex SS7 5TA (GB)
(74) Vertreter: Illing, Rolf

(56) Entgegenhaltungen:
- EP-A1- 1 279 566
- WO-A-00/12359
- WO-A-03/049977
- DE-A1- 10 250 405
- DE-A1- 19 900 592
- US-A- 5 570 900
- US-A- 5 593 179
- US-A1- 2002 171 232

## Beschreibung

Die Erfindung betrifft einen Airbag, insbesondere für ein Kraftfahrzeug, mit einem Gasgenerator, mehreren Kammern und Fangbändern.

Die allgemein aus dem Stand der Technik bekannten Airbags sollen die Fahrzeuginsassen bei einem Aufprall vor Verletzungen schützen. Deshalb ist es wichtig, dass sich die Airbags schnell entfalten und einen optimalen Schutz bieten. Im Zuge der fortschreitenden Entwicklung von Sicherheitseinrichtungen im Kraftfahrzeug wird bei zunehmend mehr Fahrzeugen beim Aufprall die Lenksäule zum Fahrzeugbug verschoben. Die Verschiebung der Lenksäule zum Fahrzeugbug ist jedoch für eine optimale Wirkung der bisher bekannten Airbags nachteilig, da somit eine für die optimale Wirkung des Airbags erforderliche Stützfläche verloren geht. Bei der Verschiebung der Lenksäule zum Fahrzeugbug wird eine die Lenksäule abdeckende Verkleidung ebenfalls verschoben, sodass im unteren Bereich des Armaturenbretts ein Loch entsteht, in das der Airbag wenigstens teilweise gedrückt wird. Somit ist keine ausreichende Stützfläche für den Airbag vorhanden. Folglich kann der Airbag nicht seine optimale Wirkung entfalten.

In der DE 199 00 592 A1 wird eine Kniestützvorrichtung beschrieben, bei der eine Verkleidung zwischen dem Airbag und dem Fahrzeuginsassen angeordnet ist. Beim Aufprall wird die Verkleidung zum Lenkrad verschoben. Der Fahrzeuginsasse wird bei dieser Konstruktion gegen die Verkleidung gedrückt. Diese Konstruktion ist jedoch relativ aufwändig und somit teuer.

Aus der EP 0 952 043 A1 ist eine Knieschutzeinrichtung für Fahrzeuginsassen bekannt, die einen Gassack mit einer Gassackwandung hat, der sich im aufgeblasenen Zustand vor den Knien des Fahrzeuginsassen erstreckt, an den Knien im Rückhaltefall anliegt und die Knie an einer Vorverlagerung weitgehend hindern soll. Im Gassack sind Mittel vorgesehen, die gegenüberliegende Abschnitte der Gassackwandung (5) verbinden, an diesen Abschnitten der Gassackwandung (5) befestigt und so angeordnet sind, daß sie einer Gestaltänderung des Gassacks (3) beim Eintauchen der Knie entgegenwirken.

Ein weiterer relevanter Airbag ist aus den Figuren 3 und 6 der EP 1 279 566 A und der Figur 7 der US 2002 0 171 232 A bekannt.

Die Erfindung hat die Aufgabe einen Airbag der eingangs genannten Art dahingehend weiterzuentwickeln, dass er sich besser entfaltet und einem Fahrzeuginsassen einen besseren Schutz bietet.

Die Erfindung löst die gestellte Aufgabe durch einen Airbag der eingangs genannten Art, bei dem erfindungsgemäß in seinem mittleren Bereich eine durch zwei Fangbänder gebildete Hochdruckkammer vorgesehen ist, an deren Seiten sich jeweils mindestens eine Niederdruckkammer befindet, wobei eine Gasaustrittsöffnung des Gasgenerators in der Hochdruckkammer angeordnet ist. Bei der Auslösung des Airbags strömt das Gas zuerst zwischen die beiden die Hochdruckkammer bildenden Fangbänder. Dadurch wird zuerst die Hochdruckkammer des Airbags aufgeblasen. Die Hochdruckkammer öffnet während ihres Aufblasens die Airbagabdeckung. Sobald die Hochdruckkammer aufgeblasen ist, strömt das Gas über die Enden der Fangbänder in die seitlich zur Hochdruckkammer angeordneten Niederdruckkammern, wodurch diese gefüllt werden. Gemäß dieses beschriebenen Entfaltungsvorgangs wird der Airbag stufenweise in einer bestimmten Reihenfolge aufgeblasen. Die Hochdruckkammer sorgt dabei für eine schnelle Entfaltung des Airbags. Der Airbag kommt deshalb schnell in seine gewünschte Position und gewährt somit den Fahrzeuginsassen sofort einen optimalen Schutz.

Nach einer Ausführungsform kann der Airbag zwei weitere Fangbänder aufweisen, die jeweils eine Sekundärkammer von der Niederdruckkammer abteilen. So kann das stufenweise Aufblasen des Airbags noch verbessert werden. Zudem schützen die Sekundärkammern die Knie des Fahrzeuginsassen besonders gut. Vorteilhafterweise verlaufen die weiteren Fangbänder dazu etwa quer zu den die Hochdruckkammer ausbildenden Fangbändern. Besonders bevorzugt ist es, wenn die Sekundärkammern in der Aufblasreihenfolge zwischen der Hochdruckkammer und der Niederdruckkammer angeordnet sind, dann werden nach dem schnellen Aufblasen der Hochdruckkammer die Sekundärkammern zum Knieschutz aufgeblasen.

Wenn der Airbag unterhalb der Lenksäule angeordnet ist, kann er sich zwischen den Beinen der Fahrzeuginsassen entfalten. Dadurch werden die Beine seitlich auseinandergedrückt, so dass der unter der Lenksäule ohnehin knappe Raum für die Beine nur noch ein reduziertes Verletzungsrisiko darstellt. Wenn das Fahrzeug mit einer Sicherheitseinrichtung ausgestattet ist, die beim Aufprall die Lenksäule zum Fahrzeugbug verschiebt, dann entsteht im unteren Bereich des Armaturenbretts das schon beschriebene Loch. Der erfindungsgemäße Airbag kann sich jedoch mit seiner steifen Hochdruckkammer an den Rändern des Lochs gut abstützen bis die den Bereich um das Loch herum abdeckenden Niederdruckkammern aufgeblasen sind.

Der Airbag kann auch auf der Beifahrerseite, angeordnet sein. Auch hier kommen die Vorteile des erfindungsgemäßen Airbags zum Tragen, da auch auf der Beifahrerseite harte Strukturen in Form von Handschuhfachverschluss oder Handschuhfach Seitenwänden oder ähnlichem vorkommen können.

Der Gasgenerator kann in Fahrzeuglängsrichtung in einem bestimmten Winkel zwischen der Horizontalen und der Vertikalen angeordnet sein. In einer anderen Ausführungsform kann der Gasgenerator quer zur Fahrzeuglängsrichtung platziert werden. Grundsätzlich kann der Gasgenerator abhängig von dem zur Verfügung stehenden Einbauraum in jeder Position angeordnet werden. Voraussetzung ist jedoch, dass die Gasaustrittsöffnung des Gasgenerators in der Hochdruckkammer angeordnet ist.

Die Fangbänder können im aufgeblasenen Zustand des Airbags parallel oder in einem bestimmten Winkel zueinander angeordnet sein. Insbesondere können die Fangbänder einen etwa nach unten oder oben spitz zulaufenden Winkel ausbilden. Durch die Fangbänder erhält der Airbag eine bestimmte Form. Somit kann er durch die bestimmte Anordnung der Fangbänder an bestimmte Einbauraumbedingungen angepasst werden.

Vorteilhafterweise kann der Airbag eine Einschnürung aufweisen, die beim Aufprall eine Lenksäule umgreift und den Airbag somit in einer stabilen Position hält.

Außerdem kann der Airbag Einschnürungen aufweisen, die beim Aufprall die Beine eines Fahrzeuginsassen in einer stabilen Position fixieren.

Wenn im aufgeblasenen Zustand der Hochdruckkammer zwischen den vom Gasgenerator am weitesten entfernten Enden der Fangbänder und der Airbaghülle ein Abstand existiert, kann das Gas über die Enden der Fangbänder von der Hochdruckkammer in die Niederdruckkammern strömen.

Entsprechend ist bei der Verwendung von Sekundärkammern zwischen den Enden der Fangbänder und der Airbaghülle und/oder den Fangbändern der Hochdruckkammer im aufgeblasenen Zustand der Sekundärkammer ein Abstand vorgesehen. So kann das Gas über die Enden der Fangbänder von der Hochdruckkammer in die Sekundärkammern und anschließend von dort in die Niederdruckkammern strömen.

Damit die Hochdruckkammer möglichst schnell aufgeblasen werden kann, können die Fangbänder gasundurchlässig sein. Dadurch ist außerdem sichergestellt, dass das Gas nur beim Überströmen der Enden der Fangbänder von der Hochdruckkammer in die Niederdruckkammern gelangen kann.

Um die Fangbänder zuverlässig mit der Airbaghülle zu verbinden, können sie mit der Airbaghülle vernäht und/oder verklebt und/oder verschweißt sein.

Um den Entfaltungsvorgang zu unterstützen ist in einer Ausführungsform der Erfindung vorgesehen, dass erste Reißnähte vorgesehen sind, die etwa parallel zu den die Hochdruckkammer ausbildenden Fangbändern, insbesondere im Bereich der Niederdruckkammer angeordnet, verlaufen. Zusätzlich kann noch mindestens eine zweite Reißnaht vorgesehen sein, die etwa senkrecht zu den Fangbändern verläuft und vorzugsweise an den vom Gasgenerator am weitesten entfernten Enden der Fangbänder angeordnet ist. Die Reißnähte sind dabei derart ausgelegt, dass sie bei einem vorherbestimmten Druck aufreißen und so das stufenweise kontrollierte Aufblasen des Airbags unterstützen.

Nach der Erfindung kann alternativ oder ergänzend zu den Reißnähten der Airbag nach einem besonderen Verfahren verpackt bzw. aufgerollt/gefaltet sein, um die Aufblasreihenfolge zu unterstützen. Entsprechend der gewollten Aufblasreihenfolge wird der Teil des Airbags, der sich zuerst entfalten/aufblasen soll, zuletzt verpackt bzw. aufgerollt/gefaltet. Im vorliegenden Fall wird der Airbag also so aufgerollt/gefaltet, dass sich die Hochdruckkammer zuerst aufblasen kann. Anschließend sollte der Bereich zwischen Hochdruckkammer und Niederdruckkammer bzw. Sekundärkammer und zuletzt die Niederdruckkammer selbst aufgeblasen werden. Dazu umfasst das Verpackungsverfahren der Erfindung die Schritte:
(i) Aufrollen des Airbags entlang erster Achsen, die etwa parallel zu den die Hochdruckkammer ausbildenden Fangbändern verlaufen und insbesondere im Bereich der Niederdruckkammer angeordnet sind, und
(ii) Aufrollen des Airbags entlang einer zweiten Achse, die etwa senkrecht zu den Fangbändern verläuft und vorzugsweise an dem vom Gasgenerator am weitesten entfernten Enden der Fangbänder angeordnet ist

Nachfolgend werden Ausführungsbeispiele eines erfindungsgemäßen Airbags anhand der beiliegenden Zeichnungen näher erläutert.

Im Einzelnen zeigen:

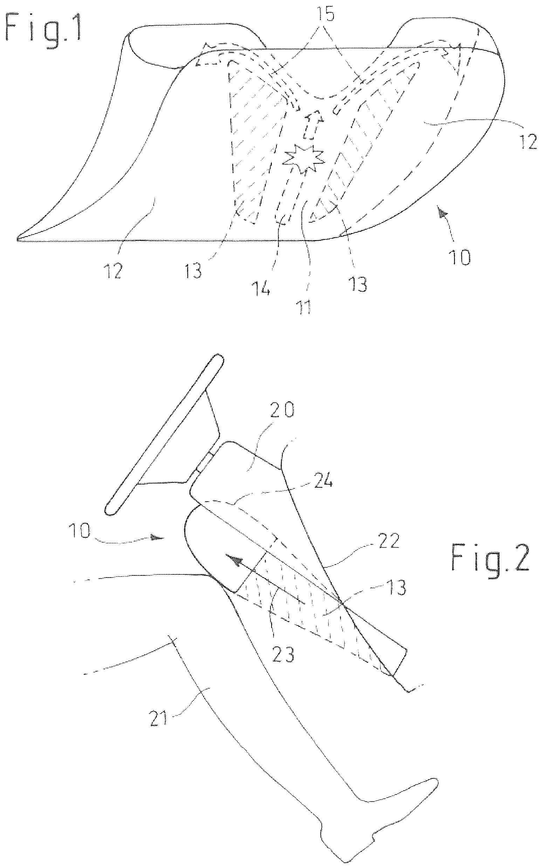

- Fig. 1: eine perspektivische Ansicht auf einen Airbag;
- Fig. 2: eine Seitenansicht auf den unter einer Lenksäule angeordneten Airbag aus Fig. 1;

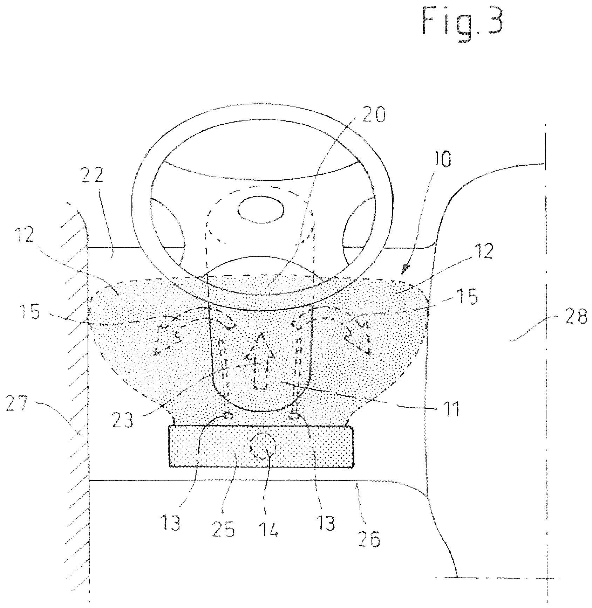

- Fig. 3: eine Ansicht in Fahrzeugrichtung auf den unter einer Lenksäule angeordneten Airbag aus Fig. 1;

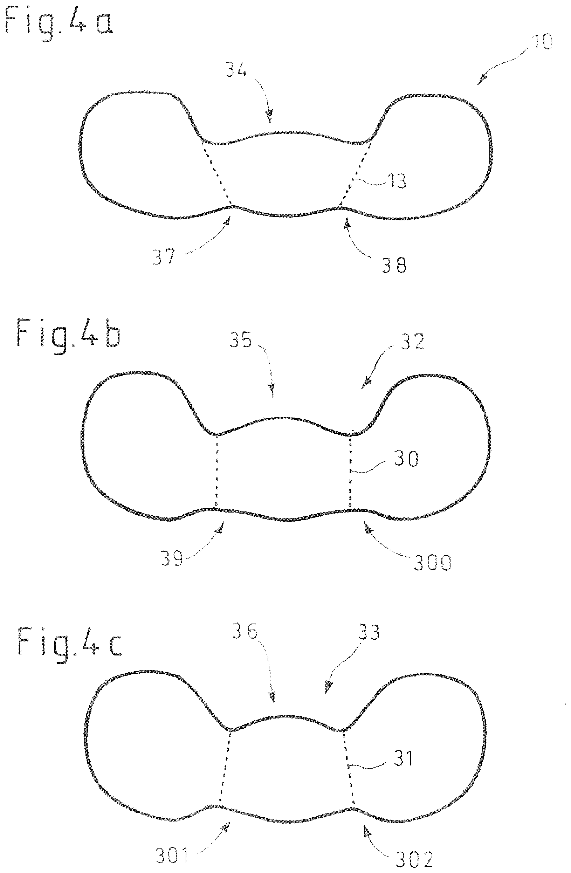

- Fig. 4a: eine Draufsicht auf den Airbag aus Fig. 1;
- Fig. 4b: eine Draufsicht auf eine zweite Ausführungsform eines Airbags;
- Fig. 4c: eine Draufsicht auf eine dritte Ausführungsform eines Airbags;

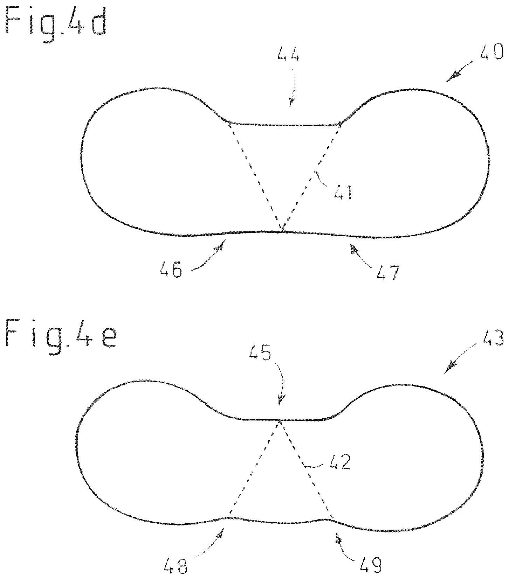

- Fig. 4d: eine Draufsicht auf eine vierte Ausführungsform eines Airbags;
- Fig. 4e: eine Draufsicht auf eine fünfte Ausführungsform eines Airbags;

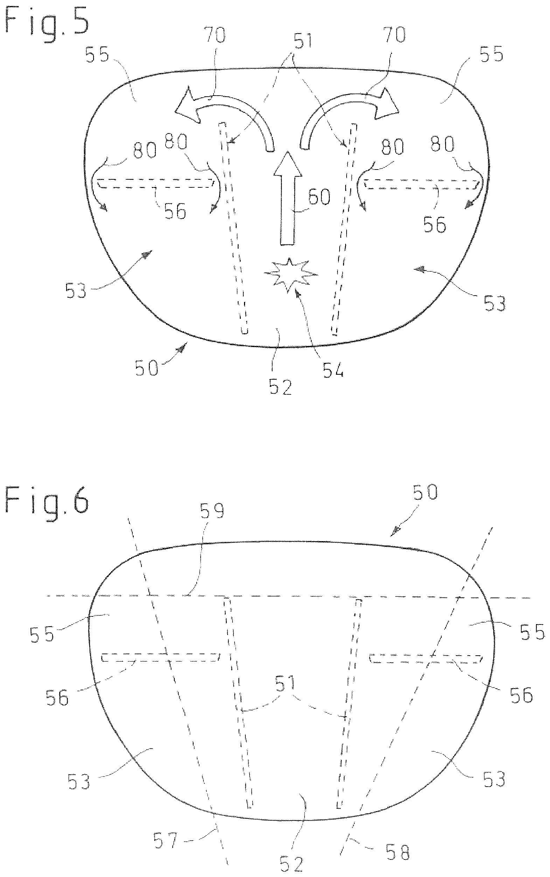

- Fig. 5: eine schematische Ansicht in Fahrzeugrichtung auf eine weitere Ausführungsform eines Airbags und
- Fig. 6: eine schematische Ansicht entsprechend Fig. 5 mit eingezeichneten Aufroll-/Faltachsen.

Fig. 1 zeigt einen Airbag 10 mit einer Hochdruckkammer 11 und seitlich davon angeordneten Niederdruckkammern 12. Fangbänder 13 begrenzen die Hochdruckkammer 11, und trennen gleichzeitig die Hochdruckkammer 11 von den Niederdruckkammern 12 ab. Beim Entfaltungsvorgang des Airbags 10 strömt von einem Gasgenerator 14 Gas in die Hochdruckkammer 11 ein. Das Gas wird durch die Fangbänder 13 nach oben geführt. Am oberen Ende der Fangbänder 13 strömt das Gas entlang von Pfeilen 15 in die Niederdruckkammern 12 ein. Somit entfaltet sich der Airbag 10 zuerst in seinem mittleren Bereich, in dem die Hochdruckkammer 11 angeordnet ist. Anschließend werden die Niederdruckkammern 12 aufgeblasen. Durch die Fangbänder 13 und die Hochdruckkammer 11 ist der Entfaltungsvorgang des Airbags 10 genau vorherbestimmt. Durch die Hochdruckkammer 11 kommt der Airbag 10 schnell in seine gewünschte Position, so dass er Fahrzeuginsassen sofort einen optimalen Schutz gewährt. Wenn die Fangbänder 13 gasundurchlässig sind, kann die Hochdruckkammer 11 besonders schnell aufgeblasen werden. Außerdem ist dadurch sichergestellt, dass das Gas entlang der Pfeile 15 von der Hochdruckkammer 11 in die Niederdruckkammern 12 gelangt.

Fig. 2 zeigt den aufgeblasenen Airbag 10 zwischen einer Lenksäule 20 und einem Bein 21 eines Fahrzeuginsassen. Der Airbag 10 vermeidet somit, dass das Bein 21 gegen die Lenksäule 20 oder den unteren Bereich eines Armaturenbretts 22 beim Aufprall gedrückt wird. Ein Pfeil 23 deutet den Gasstrom in der Hochdruckkammer 11 beim Aufblasen des Airbags 10 an. Zwischen dem oberen Ende der Fangbänder 13 und dem oberen Bereich einer Airbaghülle 24 existiert ein Abstand, sodass das Gas von der Hochdruckkammer 11 in die Niederdruckkammern 12 überströmen kann. Der Gasgenerator 14 ist, zusammen mit dem gefalteten Airbag, am unten an der Lenksäule angeordnet. Daher kann sich der Airbag 10 unterhalb der Lenksäule zwischen den Beinen 21 des Fahrzeuginsassen entfalten. Während des Entfaltungsvorganges drückt der Airbag 10 die Beine 21 seitlich auseinander, wodurch der geringe Raum unterhalb des Armaturenbretts 22 beim Aufprall optimal ausgenutzt, und somit das Verletzungsrisiko reduziert wird.

Fig. 3 zeigt die Anordnung des aufgeblasenen Airbags 10 unter der Lenksäule 20 in einer Ansicht in Fahrzeugrichtung. Der gefaltete Airbag 10 (nicht dargestellt) und der Gasgenerator sind Teil der Airbag Einheit 25. Diese ist in der Nähe der Unterkante 26 des Armaturenbrettes 22 unterhalb der Lenksäule 20 angeordnet. Im entfalteten Zustand des Airbags 10 sind die Fangbänder 13 im wesentlichen parallel zur Lenksäule 20 unterhalb derselben angeordnet, wodurch die Hochdruckkammer 11 im wesentlichen unter der Lenksäule 20 selbst angeordnet ist, während die Niederdruckkammern 12 sich im wesentlichen links und rechts der Lenksäule 20 im Fußraum des Fahrzeuges befinden. Aus dem am unteren Ende des Airbags 10 angeordneten Gasgenerator 14 strömt das Gas in Richtung des Pfeils 23 in die Hochdruckkammer 11 und von dort in Richtung der Pfeile 15 in die Niederdruckkammern 12. Der entfaltete Airbag 10 wird links von der schematisch dargestellten Türverkleidung 27 und rechts von der Mittelkonsole 28 begrenzt.

Die Fign. 4a bis 4e zeigen verschiedene mögliche Anordnungen der Fangbänder 13, 30, 31, 41 und 42. So ist es möglich, dass die Fangbänder 13, 30, 31, 41 und 42 parallel (siehe Fig. 4b) oder in einem bestimmten Winkel (siehe Fign. 4a und 4c) oder sogar in einem etwa nach unten oder oben spitz zulaufenden Winkel (siehe Fign. 4d und 4e) zueinander angeordnet sind. Durch die bestimmte Anordnung der Fangbänder 13, 30, 31, 41 und 42 erhalten die Airbags 10, 32, 33, 40 und 43 eine bestimmte Form, die an den jeweils zur Verfügung stehenden Einbauraum angepasst ist. Insbesondere weisen die Airbags 10, 32, 33, 40 und 43 eine Einschnürung 34, 35, 36, 44 und 45 auf. Die Einschnürungen 34, 35, 36, 44 und 45 umgreifen beim Aufprall die Lenksäule und halten somit den Airbag 10, 32, 33, 40 und 43 in einer stabilen Position. Ferner weisen die Airbags 10, 32, 33, 40 und 43 Einschnürungen 37, 38, 39, 300, 301, 302, 46, 47, 48 und 49 auf. Sie halten beim Aufprall die Beine des Insassen in einer stabilen Position.

Fig. 5 zeigt die schematische Anordnung eines aufgeblasenen Airbags 50 in einer Ansicht in Fahrzeugrichtung, der im Wesentlichen dem aus Fig. 3 entspricht. Es wird daher nachfolgend lediglich auf die Unterschiede eingegangen.

Im entfalteten Zustand des Airbags 50 sind die Fangbänder 51 im wesentlichen parallel zur Lenksäule (vgl. Fig. 3) unterhalb derselben angeordnet, wodurch die Hochdruckkammer 52 im wesentlichen unter der Lenksäule selbst angeordnet ist, während die Niederdruckkammern 53 sich im wesentlichen links und rechts der Lenksäule im Fußraum des Fahrzeuges befinden. Zwischen der Hochdruckkammer 52 und den Niederdruckkammern 53 befinden sich Sekundärkammern 55, die durch Fangbänder 56 gebildet werden, die etwa quer zu den Fangbändern 51 der Hochdruckkammer 52 verlaufen und die Sekundärkammern 55 von den Niederdruckkammern 53 "abtrennen". Die Sekundärkammern 55 liegen im aufgeblasenen Zustand an den Knien des Fahrzeuginsassen an und schützen diese.

Aus dem am unteren Ende des Airbags 50 angeordneten Gasgenerator 54 strömt das Gas in Richtung des Pfeils 60 in die Hochdruckkammer 52 und von dort in Richtung der Pfeile 70 in die Sekundärkammern und von dort anschließend entlang der Richtung der Pfeile 80 in die Niederdruckkammern 53.

In Fig. 6 ist eine schematische Ansicht entsprechend Fig. 5 mit eingezeichneten Aufroll-/Faltachsen 57, 58 und 59 des Airbags 50 abgebildet. Entsprechend der gewollten Aufblasreihenfolge wird der Teil des Airbags, der sich zuerst entfalten/aufblasen soll, zuletzt aufgerollt/gefaltet. Im vorliegenden Fall wird der Airbag also so aufgerollt/gefaltet, dass sich die Hochdruckkammer 52 zuerst aufblasen kann. Anschließend sollte der Bereich zwischen Hochdruckkammer 52 und Niederdruckkammer 53, Sekundärkammer 55 und zuletzt die Niederdruckkammer 53 selbst aufgeblasen werden. Dazu wird der Airbag zuerst entlang der Achsen 57, 58, die etwa parallel zu den die Hochdruckkammer ausbildenden Fangbändern 51 verlaufen und im Bereich der Niederdruckkammer 53 und auch der davon abgeteilten Sekundärkammer 55 angeordnet sind, aufgerollt bzw. gefaltet. Anschließend erfolgt ein Aufrollen des Airbags entlang der zweiten Achse 59, die etwa senkrecht zu den Fangbändern 51 verläuft und vorzugsweise an dem vom Gasgenerator am weitesten entfernten Enden der Fangbänder 51 angeordnet ist.

Alternativ oder zusätzlich können Reißnähte entlang der Aufroll-/Faltachsen 57, 58 und 59 vorgesehen sein, um das Aufblasen bzw. deren Reihenfolge zu unterstützen (vgl. oben). Die Reißnähte sind dann derart ausgelegt, dass sie bei einem vorherbestimmten Druck aufreißen und so das stufenweise kontrollierte Aufblasen des Airbags bzw. seiner unterschiedlichen Kammern unterstützen.

### BEZUGSZEICHENLISTE

- 10.: Airbag
- 11.: Hochdruckkammer
- 12.: Niederdruckkammer
- 13.: Fangband
- 14.: Gasgenerator
- 15.: Pfeile

- 20.: Lenksäule
- 21.: Bein
- 22.: Armaturenbrett
- 23.: Pfeil
- 24.: Airbaghülle

- 30.: Fangband
- 31.: Fangband
- 32.: Airbag
- 33.: Airbag
- 34.: Einschnürung
- 35.: Einschnürung
- 36.: Einschnürungen
- 37.: Einschnürung
- 38.: Einschnürung
- 39.: Einschnürung

- 300.: Einschnürung
- 301.: Einschnürung
- 302.: Einschnürung

- 40.: Airbag
- 41.: Fangband
- 42.: Fangband
- 43.: Airbag
- 44.: Einschnürung
- 45.: Einschnürung
- 46.: Einschnürung
- 47.: Einschnürung
- 48.: Einschnürung
- 49.: Einschnürung

- 50.: Airbag
- 51.: Fangband
- 52.: Hochdruckkammer
- 53.: Niederdruckkammer
- 54.: Gasgenerator
- 55.: Sekundärkammer
- 56.: Fangband
- 57.: Aufroll-/Faltachse bzw. Reißnaht
- 58.: Aufroll-/Faltachse bzw. Reißnaht
- 59.: Aufroll-/Faltachse bzw. Reißnaht

- 60.: Pfeil für Aufblasrichtung
- 70.: Pfeil für Aufblasrichtung
- 80.: Pfeil für Aufblasrichtung

## Patentansprüche

1. Airbag (10, 32, 33, 40, 43, 50), insbesondere für ein Kraftfahrzeug, mit einem Gasgenerator (14, 54), mehreren Kammern (11, 12, 52, 53, 55) und Fangbändern (13, 41, 42, 51),
wobei er in seinem mittleren Bereich eine durch zwei Fangbänder (13, 51) gebildete Hochdruckkammer (11, 52) aufweist, an deren Seiten sich jeweils mindestens eine Niederdruckkammer (12, 53) befindet, wobei eine Gasaustrittsöffnung des Gasgenerators (14, 54) in der Hochdruckkammer (11, 52) angeordnet ist.
**dadurch gekennzeichnet, dass** er zwei weitere Fangbänder (56) aufweist, die jeweils eine Sekundärkammer (55) von der Niederdruckkammer (53) abteilen.

2. Airbag (50) nach Anspruch 1,
**dadurch gekennzeichnet, dass** die weiteren Fangbänder (56) etwa quer zu den die Hochdruckkammer (52) ausbildenden Fangbändern (51) verlaufen.

3. Airbag (50) nach Anspruch 1 oder 2,
**dadurch gekennzeichnet, dass** die Sekundärkammern (55) in der Aufblasreihenfolge zwischen der Hochdruckkammer (52) und der Niederdruckkammer (53) angeordnet sind.

4. Airbag (10, 32, 33, 40, 43, 50) nach einem der Ansprüche 1 bis 3,
**dadurch gekennzeichnet, dass** er unterhalb der Lenksäule (20) angeordnet ist.

5. Airbag (10, 32, 33, 40, 43, 50) nach einem der Ansprüche 1 bis 3,
**dadurch gekennzeichnet, dass** er auf der Beifahrerseite angeordnet ist.

6. Airbag (10, 32, 33, 40, 43, 50) nach einem der Ansprüche 1 bis 5,
**dadurch gekennzeichnet, dass** der Gasgenerator (14, 54) in Fahrzeuglängsrichtung in einem bestimmten Winkel zwischen der Horizontalen und der Vertikalen angeordnet ist.

7. Airbag (10, 32, 33, 40, 43, 50) nach einem der Ansprüche 1 bis 5,
**dadurch gekennzeichnet, dass** der Gasgenerator (14, 54) quer zur Fahrzeuglängsrichtung angeordnet ist.

8. Airbag (10, 32, 33, 40, 43, 50) nach einem der Ansprüche 1 bis 7,
**dadurch gekennzeichnet, dass** die Fangbänder (13, 41, 42, 51, 56) im aufgeblasenen Zustand des Airbags (10, 32, 33, 40, 43, 50) parallel oder in einem bestimmten Winkel zueinander angeordnet sind.

9. Airbag (40) nach Anspruch 8,
**dadurch gekennzeichnet, dass** die Fangbänder (41, 42) einen etwa nach unten oder oben spitz zulaufenden Winkel ausbilden.

10. Airbag (10, 32, 33, 40, 43, 50) nach einem der Ansprüche 1 bis 9,
**dadurch gekennzeichnet, dass** er eine Einschnürung (34, 35, 36, 44, 45) aufweist, die beim Aufprall eine Lenksäule umgreift.

11. Airbag (10, 32, 33, 40, 43, 50) nach einem der Ansprüche 1 bis 10,
**dadurch gekennzeichnet, dass** er Einschnürungen (37, 38, 39, 300, 301, 302, 46, 47, 48, 49) aufweist, die beim Aufprall die Beine eines Fahrzeuginsassen fixieren.

12. Airbag (10, 32, 33, 40, 43, 50) nach einem der Ansprüche 1 bis 11,
**dadurch gekennzeichnet, dass** zwischen den vom Gasgenerator (14, 54) am weitesten entfernten Enden der Fangbänder (13, 51) und der Airbaghülle (24) im aufgeblasenen Zustand der Hochdruckkammer (11, 52) ein Abstand existiert.

13. Airbag (50) nach einem der Ansprüche 1 bis 12,
**dadurch gekennzeichnet, dass** zwischen den Enden der Fangbänder (56) und der Airbaghülle und/oder den Fangbändern (51) der Hochdruckkammer (52) im aufgeblasenen Zustand der Sekundärkammer (53) ein Abstand existiert.

14. Airbag (10, 32, 33, 40, 43, 50) nach einem der Ansprüche 1 bis 13,
**dadurch gekennzeichnet, dass** die Fangbänder (13, 41, 42, 51, 56) gasundurchlässig sind.

15. Airbag (10, 32, 33, 40, 43, 50) nach einem der Ansprüche 1 bis 14,
**dadurch gekennzeichnet, dass** die Fangbänder (13, 41, 42, 51, 56) mit der Airbaghülle (24) vernäht und/oder verklebt und/oder verschweißt sind.

16. Airbag (50) nach einem der Ansprüche 1 bis 15,
**dadurch gekennzeichnet, dass** erste Reißnähte (57, 58) vorgesehen sind, die etwa parallel zu den Fangbändern (51), insbesondere im Bereich der Niederdruckkammer (53, 55) angeordnet, verlaufen.

17. Airbag (50) nach einem der Ansprüche 1 bis 16,
**dadurch gekennzeichnet, dass** mindestens eine zweite Reißnaht (59) vorgesehen ist, die etwa senkrecht zu den Fangbändern (51) verläuft und vorzugsweise an den vom Gasgenerator (54) am weitesten entfernten Enden der Fangbänder (51) angeordnet ist.

18. Verfahren zum Verpacken eines Airbags (50) nach einem der Ansprüche 1 bis 17 zur Unterstützung der Aufblasreihenfolge umfassend die Schritte:
(i) Aufrollen des Airbags (50) entlang erster Achsen (57, 58), die etwa parallel zu den die Hochdruckkammer (52) ausbildenden Fangbändern (51) verlaufen und insbesondere im Bereich der Niederdruckkammer (53, 55) angeordnet sind, und
(ii) Aufrollen des Airbags (50) entlang einer zweiten Achse (59), die etwa senkrecht zu den Fangbändern (51) verläuft und vorzugsweise an den vom Gasgenerator (54) am weitesten entfernten Enden der Fangbänder (51) angeordnet ist.

## Claims

1. Airbag (10, 32, 33, 40, 43, 50), in particular for a motor vehicle, with a gas generator (14, 54), a plurality of chambers (11, 12, 52, 53, 55) and catch straps (13, 41, 42, 51), wherein the central region of the airbag has a high-pressure chamber (11, 52) which is formed by two catch straps (13, 51) and at the sides of which at least one low-pressure chamber (12, 53) is located in each case, wherein a gas outlet opening of the gas generator (14, 54) is arranged in the high-pressure chamber (11, 52), **characterized in that** said airbag has two further catch straps (56) which each divide off a secondary chamber (55) from the low-pressure chamber (53).

2. Airbag (50) according to Claim 1, **characterized in that** the further catch straps (56) run approximately transversely with respect to the catch straps (51) forming the high-pressure chamber (52).

3. Airbag (50) according to Claim 1 or 2, **characterized in that** the secondary chambers (55) are arranged in the inflation sequence between the high-pressure chamber (52) and the low-pressure chamber (53).

4. Airbag (10, 32, 33, 40, 43, 50) according to one of Claims 1 to 3, **characterized in that** said airbag is arranged below the steering column (20).

5. Airbag (10, 32, 33, 40, 43, 50) according to one of Claims 1 to 3, **characterized in that** said airbag is arranged on the front passenger's side.

6. Airbag (10, 32, 33, 40, 43, 50) according to one of Claims 1 to 5, **characterized in that** the gas generator (14, 54) is arranged in the longitudinal direction of the vehicle at a certain angle between the horizontal and the vertical.

7. Airbag (10, 32, 33, 40, 43, 50) according to one of Claims 1 to 5, **characterized in that** the gas generator (14, 54) is arranged transversely with respect to the longitudinal direction of the vehicle.

8. Airbag (10, 32, 33, 40, 43, 50) according to one of Claims 1 to 7, **characterized in that**, in the inflated state of the airbag (10, 32, 33, 40, 43, 50), the catch straps (13, 41, 42, 51, 56) are arranged parallel or at a certain angle to one another.

9. Airbag (40) according to Claim 8, **characterized in that** the catch straps (41, 42) form an approximately downwardly or upwardly tapering angle.

10. Airbag (10, 32, 33, 40, 43, 50) according to one of Claims 1 to 9, **characterized in that** said airbag has a constriction (34, 35, 36, 44, 45) which engages around a steering column during the impact.

11. Airbag (10, 32, 33, 40, 43, 50) according to one of Claims 1 to 10, **characterized in that** said airbag has constrictions (37, 38, 39, 300, 301, 302, 46, 47, 48, 49) which secure the legs of a vehicle occupant during the impact.

12. Airbag (10, 32, 33, 40, 43, 50) according to one of Claims 1 to 11, **characterized in that**, in the inflated state of the high-pressure chamber (11, 52), there is a distance between those ends of the catch straps (13, 51) which are furthest away from the gas generator (14, 54) and the airbag casing (24) .

13. Airbag (50) according to one of Claims 1 to 12, **characterized in that**, in the inflated state of the secondary chamber (53), there is a distance between the ends of the catch straps (56) and the airbag casing and/or the catch straps (51) of the high-pressure chamber (52).

14. Airbag (10, 32, 33, 40, 43, 50) according to one of Claims 1 to 13, **characterized in that** the catch straps (13, 41, 42, 51, 56) are gas-impermeable.

15. Airbag (10, 32, 33, 40, 43, 50) according to one of Claims 1 to 14, **characterized in that** the catch straps (13, 41, 42, 51, 56) are sewn and/or adhesively bonded and/or welded to the airbag casing (24) .

16. Airbag (50) according to one of Claims 1 to 15, **characterized in that** first tear seams (57, 58) are provided which run approximately parallel to the catch straps (51), in particular arranged in the region of the low-pressure chamber (53, 55).

17. Airbag (50) according to one of Claims 1 to 16, **characterized in that** at least one second tear seam (59) is provided which runs approximately perpendicularly to the catch straps (51) and is preferably arranged at those ends of the catch straps (51) which are furthest away from the gas generator (54).

18. Method for packaging an airbag (50) according to one of Claims 1 to 17 for assisting the inflation sequence, comprising the following steps:
(i) rolling up the airbag (50) along first axes (57, 58) which run approximately parallel to the catch straps (51) forming the high-pressure chamber (52) and are arranged in particular in the region of the low-pressure chamber (53, 55), and
(ii) rolling up the airbag (50) along a second axis (59) which runs approximately perpendicularly to the catch straps (51) and is preferably arranged at those ends of the catch straps (51) which are furthest away from the gas generator (54).

## Revendications

1. Coussin gonflable (10, 32, 33, 40, 43, 50), en particulier pour un véhicule automobile, avec un générateur de gaz (14, 54), plusieurs chambres (11, 12, 52, 53, 55) et bandes de retenue (13, 41, 42, 51),
dans lequel il présente dans sa région médiane une chambre à haute pression (11, 52) formée par deux bandes de retenue (13, 51), sur les côtés de laquelle il se trouve chaque fois au moins une chambre à basse pression (12, 53), dans lequel un orifice de sortie de gaz du générateur de gaz (14, 54) est disposé dans la chambre à haute pression (11, 52),
**caractérisé en ce qu'**il présente deux autres bandes de retenue (56), qui séparent respectivement une chambre secondaire (55) de la chambre à basse pression (53).

2. Coussin gonflable (50) selon la revendication 1, **caractérisé en ce que** les autres bandes de retenue (56) s'étendent environ transversalement aux bandes de retenue (51) formant la chambre à haute pression (52).

3. Coussin gonflable (50) selon la revendication 1 ou 2, **caractérisé en ce que** les chambres secondaires (55) sont disposées dans la séquence de gonflage entre la chambre à haute pression (52) et la chambre à basse pression (53).

4. Coussin gonflable (10, 32, 33, 40, 43, 50) selon l'une quelconque des revendications 1 à 3, **caractérisé en ce qu'**il est disposé en dessous de la colonne de direction (20).

5. Coussin gonflable (10, 32, 33, 40, 43, 50) selon l'une quelconque des revendications 1 à 3, **caractérisé en ce qu'**il est disposé sur le côté du passager.

6. Coussin gonflable (10, 32, 33, 40, 43, 50) selon l'une quelconque des revendications 1 à 5, **caractérisé en ce que** le générateur de gaz (14, 54) est disposé dans la direction longitudinale du véhicule sous un angle déterminé entre l'horizontale et la verticale.

7. Coussin gonflable (10, 32, 33, 40, 43, 50) selon l'une quelconque des revendications 1 à 5, **caractérisé en ce que** le générateur de gaz (14, 54) est disposé transversalement à la direction longitudinale du véhicule.

8. Coussin gonflable (10, 32, 33, 40, 43, 50) selon l'une quelconque des revendications 1 à 7, **caractérisé en ce que** les bandes de retenue (13, 41, 42, 51, 56) dans l'état gonflé du coussin gonflable (10, 32, 33, 40, 43, 50) sont disposées parallèlement ou sous un angle déterminé l'une par rapport à l'autre.

9. Coussin gonflable (40) selon la revendication 8, **caractérisé en ce que** les bandes de retenue (41, 42) forment un angle se terminant sensiblement en pointe vers le bas ou vers le haut.

10. Coussin gonflable (10, 32, 33, 40, 43, 50) selon l'une quelconque des revendications 1 à 9, **caractérisé en ce qu'**il présente une gorge (34, 35, 36, 44, 45), qui enveloppe la colonne de direction en cas de collision.

11. Coussin gonflable (10, 32, 33, 40, 43, 50) selon l'une quelconque des revendications 1 à 10, **caractérisé en ce qu'**il présente des gorges (37, 38, 39, 300, 301, 302, 46, 47, 48, 49) qui immobilisent les jambes d'un occupant du véhicule en cas de collision.

12. Coussin gonflable (10, 32, 33, 40, 43, 50) selon l'une quelconque des revendications 1 à 11, **caractérisé en ce qu'**il existe une distance entre les extrémités des bandes de retenue (13, 51) le plus éloignées du générateur de gaz (14, 54) et l'enveloppe du coussin gonflable (24) dans l'état gonflé de la chambre à haute pression (11, 52).

13. Coussin gonflable (50) selon l'une quelconque des revendications 1 à 12, **caractérisé en ce qu'**il existe une distance entre les extrémités des bandes de retenue (56) et l'enveloppe du coussin gonflable et/ou les bandes de retenue (51) de la chambre à haute pression (52) dans l'état gonflé de la chambre secondaire (53).

14. Coussin gonflable (10, 32, 33, 40, 43, 50) selon l'une quelconque des revendications 1 à 13, **caractérisé en ce que** les bandes de retenue (13, 41, 42, 51, 56) sont imperméables au gaz.

15. Coussin gonflable (10, 32, 33, 40, 43, 50) selon l'une quelconque des revendications 1 à 14, **caractérisé en ce que** les bandes de retenue (13, 41, 42, 51, 56) sont cousues et/ou collées et/soudées à l'enveloppe du coussin gonflable (24) .

16. Coussin gonflable (50) selon l'une quelconque des revendications 1 à 15, **caractérisé en ce qu'**il est prévu des premières lignes d'arrachement (57, 58), qui sont sensiblement parallèles aux bandes de retenue (51), et qui sont en particulier disposées dans la région de la chambre à basse pression (53, 55).

17. Coussin gonflable (50) selon l'une quelconque des revendications 1 à 16, **caractérisé en ce qu'**il est prévu au moins une deuxième ligne d'arrachement (59), qui est sensiblement perpendiculaire aux bandes de retenue (51) et qui est de préférence disposée aux extrémités des bandes de retenue (51) le plus éloignées du générateur de gaz (54) .

18. Procédé d'emballage d'un coussin gonflable (50) selon l'une quelconque des revendications 1 à 17 pour le soutien de la séquence de gonflage, comprenant les étapes suivantes:
(i) enrouler le coussin gonflable (50) le long de premiers axes (57, 58), qui sont sensiblement parallèles aux bandes de retenue (51) formant la chambre à haute pression (52) et qui sont en particulier disposés dans la région de la chambre à basse pression (53, 55), et
(ii) enrouler le coussin gonflable (50) le long d'un deuxième axe (59), qui est sensiblement perpendiculaire aux bandes de retenue (51) et qui est de préférence disposé aux extrémités des bandes de retenue (51) le plus éloignées du générateur de gaz (54) .
